# DEMANDE DE BREVET EUROPEEN

(11) **EP 4 553 464 A1**
(43) Date de publication de la demande: **14.05.2025**
(21) Numéro de dépôt: 24211702.6
(22) Date de dépôt: 08.11.2024
(51) Int. Cl.: G01J 4/04, G01J 1/04, G01J 1/06

(54) **CAMERA POLARIMÉTRIQUE**

(30) Priorité: 13.11.2023 FR 2312380
(71) Demandeur: Commissariat à l'Energie Atomique et aux Energies Alternatives, 75015 Paris (FR)
(72) Inventeur: VAILLANT, Jérôme, 38054 GRENOBLE CEDEX 09 (FR)
(74) Mandataire: Brevalex

(57) **Abrégé**

L'invention porte sur une caméra polarimétrique (100), comportant un système optique (200) et un capteur d'images (300).

Le système optique (i) forme, sur le capteur d'images, N images d'une scène à imager, avec N supérieur ou égal à 2, N étant un nombre d'états de polarisation, (ii) comporte un séparateur de polarisation (220) déviant les faisceaux lumineux provenant de la scène selon les N états de polarisation, et (iii) présente N pupilles de sortie (231).

Le capteur d'images comporte une pluralité de pixels (P) répartis en N sous-ensembles de pixels. Chaque sous-ensemble est associé à une pupille de sortie, et reçoit les faisceaux lumineux incidents selon l'état de polarisation de la pupille de sortie associée. Le capteur d'images comporte N filtres angulaires (320), chaque filtre angulaire transmettant à un sous-ensemble de pixels les faisceaux lumineux provenant de la pupille de sortie associée, et filtrant les autres faisceaux lumineux.

## Description

### DOMAINE TECHNIQUE

La présente description concerne de façon générale les systèmes d'imagerie, et vise plus particulièrement les caméras dites polarimétriques, adaptées à enregistrer, pour une scène donnée, des informations relatives à la polarisation de la lumière captée.

### ÉTAT DE LA TECHNIQUE ANTÉRIEURE

La mesure de l'information de polarisation de la lumière lors de l'acquisition d'une image peut présenter un intérêt pour de nombreuses applications. Elle permet en particulier la mise en oeuvre de traitements d'amélioration des images, adaptés en fonction de l'application considérée. Par exemple, elle permet d'atténuer ou au contraire d'exacerber des reflets sur une image de toute surface provoquant une réflexion spéculaire, comme une vitre, de l'eau ou la surface d'un oeil. Elle rend en outre possible de détecter des objets manufacturés dans un environnement naturel, ces derniers présentant généralement une signature en polarisation. Parmi les applications pouvant tirer profit de la mesure de l'information de polarisation, on peut également citer des applications de contrôle industriel, des applications biomédicales, par exemple des applications de détection de cellules cancéreuses (ces dernières polarisant la lumière de par leur nature fibreuse), des applications d'amélioration de contraste pour la capture d'images en milieu diffusant (brouillard, imagerie sous-marine, etc.), ou encore des applications de cartographie de distance ou d'acquisition d'images de profondeur, dans lesquelles la polarisation peut fournir des informations sur l'orientation de la surface des objets manufacturés, et ainsi aider la reconstruction 3D en complément d'une autre modalité comme l'illumination active par lumière structurée ou par mesure de temps de vol.

Pour extraire les informations pertinentes d'une scène donnée, au moyen d'une caméra polarimétrique, une combinaison de différents états de polarisation est nécessaire. Pour cela, la caméra polarimétrique (qui comporte classiquement un système optique et un capteur d'images) doit être en mesure d'acquérir ces différents états de polarisation simultanément et avec un même point de vue afin que les images puissent être strictement superposables. Les polarisations sont donc séparées au niveau même de la caméra polarimétrique. Deux configurations sont possibles.

Dans une première configuration, la séparation des polarisations intervient au niveau du capteur d'images de la caméra polarimétrique. Le capteur d'images, présentant une matrice de pixels de détection, est alors configuré pour que chacun de ses pixels ne soit sensible qu'à un seul état de polarisation, par exemple au moyen de filtres polariseurs. Les pixels sensibles à des états de polarisation différents sont entrelacés suivant un motif élémentaire. Pour cette configuration, le système optique utilisé est un système optique standard et une seule image est formée par celui-ci sur le capteur d'images.

Une des limitations de cette première configuration est liée à l'entrelacement de ces pixels. Cela implique la réalisation de filtres polariseurs à l'échelle du pixel, donc de dimension très réduite, ce qui conduit à une réduction de ses performances. Une autre limitation réside dans le fait que, les pixels sensibles à des états de polarisation différents étant adjacents dans la matrice de pixels, de la diaphonie de polarisation (*polarization crosstalk* en terminologie anglaise) peut apparaître sur les images.

Dans une seconde configuration, la séparation des polarisations intervient cette fois-ci au niveau du système optique de la caméra polarimétrique. Dans cette configuration, le système optique est configuré pour former, sur le capteur d'images, une image par état de polarisation, chaque image étant spatialement décalée par rapport aux autres. Le système optique comporte pour cela, par exemple, un séparateur de polarisation (également appelé routeur de polarisation). Pour cette configuration, le capteur d'images utilisé est un capteur d'images standard.

Les articles « Imaging polarimetry through metasurface polarization gratings » de Rubin et al., Optics Express, mars 2022, vol. 30, n°6, p. 9389-9412, et « Matrix Fourier optics enables a compact full-Stokes polarization caméra » de Rubin et al., Science 365, 2019, eaax1839 DOI: 10.1126/science.aax1839, décrivent la réalisation de séparateurs de polarisation de type métasurfaces à placer dans le système optique, ces métasurfaces permettant de former, sur le capteur d'images, quatre images correspondant à quatre états de polarisation différents.

Une des limitations de cette seconde configuration est liée au chevauchement des images. Une image correspondant à un état de polarisation chevauchera, au moins en partie, l'image correspondant à un autre état de polarisation. Il est possible de recourir à un écran de vignettage pour limiter ce chevauchement, cependant cette solution conduit à diminuer la luminosité sur les bords de l'image.

Une autre limitation, liée à l'utilisation de métasurfaces, est la présence, autour de l'axe optique du système optique, d'une image non polarisée correspondant à l'ordre zéro de diffraction de ces métasurfaces. Bien que ces métasurfaces soient configurées pour limiter l'intensité de cette image à l'ordre zéro, il n'est cependant pas possible de la supprimer totalement.

### EXPOSÉ DE L'INVENTION

La présente invention vise à remédier au moins en partie aux inconvénients des solutions proposées par l'art antérieur, notamment à ceux exposés ci-avant.

A cet effet, l'objet de l'invention est une caméra polarimétrique comportant un système optique et un capteur d'images :
∘ le système optique, présentant un axe optique principal, étant adapté à former sur le capteur d'images au moins N images spatialement distinctes d'une scène à imager, à raison d'une image par état de polarisation, avec N supérieur ou égal à 2, N étant un nombre prédéfini d'états de polarisation, et comportant :
   - un séparateur de polarisation, adapté à dévier les faisceaux lumineux incidents provenant de la scène à imager selon les N états de polarisation, le système optique présentant alors au moins N pupilles de sortie au moins en partie décalées deux à deux orthogonalement à l'axe optique principal ;
∘ le capteur d'images, comportant une pluralité de pixels de détection comprenant chacun un photodétecteur,
   - les pixels de détection étant répartis en au moins N sous-ensembles de pixels, associés chacun à une pupille de sortie, et destinés chacun à recevoir les faisceaux lumineux incidents selon l'état de polarisation de la pupille de sortie associée.

Selon l'invention, le capteur d'images comporte au moins N filtres angulaires situés entre le système optique et les photodétecteurs, chaque filtre angulaire étant adapté à transmettre à un sous-ensemble de pixels les faisceaux lumineux incidents provenant de la pupille de sortie associée, et à filtrer au moins en partie les faisceaux lumineux incidents provenant de la ou des autres pupilles de sortie.

Une telle caméra polarimétrique permet avantageusement d'améliorer la qualité des N images associées aux N états de polarisation, notamment grâce au filtrage, par les filtres angulaires, d'au moins une partie des faisceaux lumineux parasites qui ne sont pas associés à l'état de polarisation voulu.

De plus, une telle caméra polarimétrique permet avantageusement, grâce à l'association des filtres angulaires avec le séparateur de polarisation, d'utiliser un capteur d'images standard.

Selon des modes de réalisation particuliers, la caméra polarimétrique peut comporter les caractéristiques suivantes, mises en oeuvre séparément ou en chacune de leurs combinaisons techniquement opérantes.

Selon des modes de réalisation particuliers, les pixels d'un sous-ensemble de pixels sont adjacents.

Selon des modes de réalisation particuliers, les N filtres angulaires sont disposés de manière coplanaire.

Selon des modes de réalisation particuliers, les N filtres angulaires sont formés dans une même grille présentant des ouvertures dimensionnées pour transmettre à un sous-ensemble de pixels les faisceaux lumineux incidents provenant de la pupille de sortie associée, et à filtrer au moins en partie les faisceaux lumineux incidents provenant des autres pupilles de sortie.

Selon des modes de réalisation particuliers, la grille est opaque.

Selon des modes de réalisation particuliers, le capteur d'images comporte une pluralité de microlentilles, adaptées à focaliser les faisceaux lumineux incidents sur les photodétecteurs des pixels de détection, situées entre le système optique et les filtres angulaires.

Selon des modes de réalisation particuliers, le séparateur de polarisation est une métasurface bidimensionnelle.

Selon des modes de réalisation particuliers, le capteur d'images comporte N filtres polariseurs situés entre le système optique et les filtres angulaires, adaptés à transmettre à un sous-ensemble de pixels les faisceaux lumineux incidents provenant de la pupille de sortie associée et présentant l'état de polarisation associé, et à filtrer au moins en partie les faisceaux lumineux incidents provenant des autres pupilles de sortie et présentant donc d'autres états de polarisation.

Selon des modes de réalisation particuliers, les N filtres polariseurs sont disposés de manière coplanaire.

Selon des modes de réalisation particuliers les N filtres polariseurs (340) sont réalisés dans une même structure métallique.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
Figure 1 est une vue schématique et partielle, en perspective et en éclaté, d'un exemple de caméra polarimétrique selon un mode de réalisation ;
Figure 2A est un exemple de schéma optique d'une caméra polarimétrique qui ne comporte pas de filtre angulaire au niveau des pixels de détection ;
Figure 2B est un schéma optique d'une caméra polarimétrique selon un mode de réalisation ;
Figure 3A illustre un exemple de réponse angulaire d'un pixel de détection qui n'est pas associé à un filtre angulaire, et celle d'un pixel de détection associé à un filtre angulaire selon un mode de réalisation ;
Figure 3B est une vue schématique et partielle, en coupe, d'un pixel de détection d'un capteur d'images de la caméra polarimétrique selon un mode de réalisation.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

Par souci de clarté, seuls les étapes et éléments utiles à la compréhension des modes de réalisation décrits ont été représentés et sont détaillés. En particulier, les photodétecteurs et les circuits électroniques de contrôle des capteurs d'images des caméras polarimétriques décrits n'ont pas été détaillés, les modes de réalisation décrits étant compatibles avec les réalisations usuelles de ces éléments.

De plus, lorsqu'il est fait référence à des qualificatifs de position absolue, tels que les termes « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

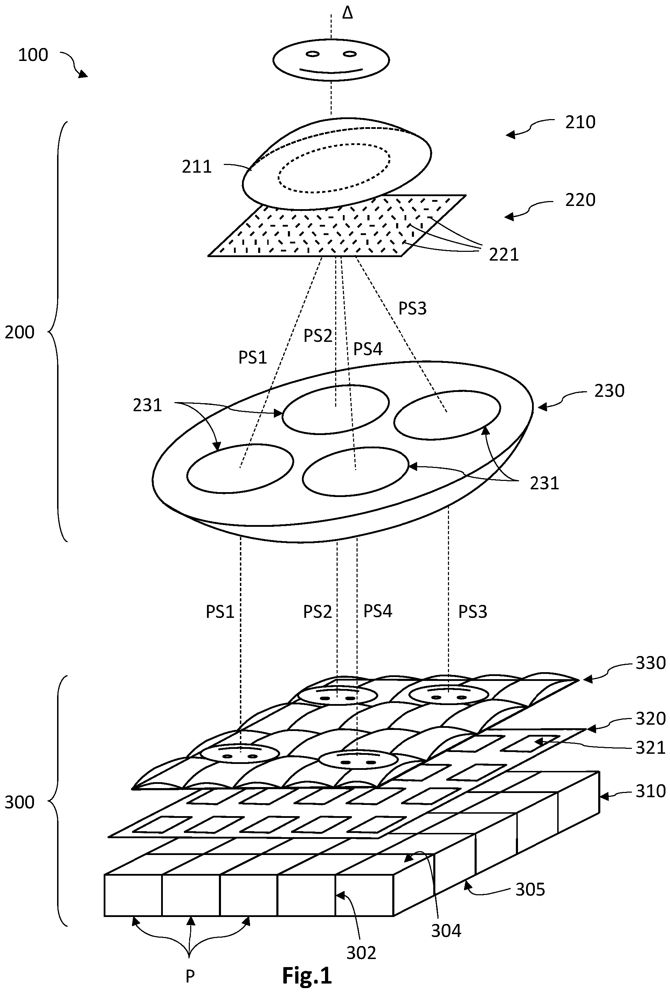

La figure 1 illustre une vue schématique et partielle, en perspective, d'une caméra polarimétrique 100 selon un exemple de réalisation de l'invention. La caméra polarimétrique 100 comporte a minima :
- un système optique 200, adapté à former sur un capteur d'images 300 au moins N images spatialement distinctes d'une scène à imager, à raison d'une image par état de polarisation, avec N supérieur ou égal à 2, N étant un nombre prédéfini d'états de polarisation, et présentant au moins N pupilles de sortie 231, une par état de polarisation, au moins en partie décalées deux à deux orthogonalement à un axe optique principal Δ ;
- un capteur d'images 300, comportant une pluralité de pixels de détection P, lesquels sont répartis en au moins N sous-ensembles de pixels, associés chacun à une pupille de sortie 231, et destinés chacun à recevoir les faisceaux lumineux incidents selon l'état de polarisation de la pupille de sortie associée.

Le système optique 200 comporte un séparateur de polarisation 220, adapté à séparer les faisceaux lumineux incidents provenant de la scène à imager selon les N états de polarisation prédéfinis. N est au moins égal à 2 (au moins 2 états de polarisation séparés), mais peut être égal à 3, à 4 voire à plus. Le système optique 200 comporte de préférence une optique de collimation 210 située en amont du séparateur de polarisation 220, et une optique imageante 230 située en aval du séparateur de polarisation 220.

Par image spatialement distincte, on entend que les N images formées dans le plan image du système optique 200 ne sont pas entièrement superposées deux à deux dans le plan image, mais qu'elles sont au moins en partie décalées deux à deux dans le plan image, et de préférence totalement décalées (sans recouvrement) dans le plan image. Aussi, les pupilles de sortie 231 sont au moins en partie décalées deux à deux orthogonalement à l'axe optique principal Δ, et de préférence totalement décalées (sans recouvrement) orthogonalement à l'axe optique principal Δ.

Selon l'invention, le capteur d'images 300 comporte au moins N filtres angulaires 320 situés entre le système optique 200 et les photodétecteurs 303 du capteur d'images 300, chaque filtre angulaire 320 étant adapté à transmettre à un sous-ensemble de pixels les faisceaux lumineux incidents provenant de la pupille de sortie 231 associée, et à filtrer au moins en partie les faisceaux lumineux incidents provenant de la ou des autres pupilles de sortie 231.

De préférence, le système optique 200 comporte une optique de collimation 210. Ladite optique de collimation est disposée, selon l'axe optique principal Δ, en amont du séparateur de polarisation 220, dans le sens de propagation des faisceaux lumineux incidents, de préférence perpendiculairement à l'axe optique principal Δ.

L'optique de collimation 210, par exemple une lentille, est adaptée à collecter les faisceaux lumineux incidents provenant de la scène à imager et à les collimater vers le séparateur de polarisation 220. Ainsi, les faisceaux lumineux incidents arrivant sur le séparateur de polarisation 220 sont parallèles en eux.

L'utilisation d'une telle optique de collimation 210, en amont du séparateur de polarisation 220, permet d'optimiser le fonctionnement du séparateur de polarisation 220, en particulier lorsqu'il s'agit d'une métasurface bidimensionnelle. Dans un tel cas, le séparateur de polarisation 220 (métasurface) est situé dans le plan de la pupille d'entrée 211. Ainsi, tous les rayons lumineux issus de la scène passent par la pupille d'entrée et couvrent toute la métasurface. On réalise donc une métasurface avec une taille minimale, dont la conception est simplifiée. Dans le cas où la métasurface est située en amont ou en aval de la pupille d'entrée 211, il faut alors une métasurface plus grande et sa conception peut être plus complexe.

L'optique de collimation 210 définit ici une pupille d'entrée 211 du système optique 200. Par pupille d'entrée, on entend une image du diaphragme d'ouverture du système optique 200, vu du côté de la scène à imager. Il peut ici s'agir de la bordure opaque de la lentille 210.

Notons que, dans le cas d'un système optique 200 plus complexe, celui-ci peut comporter des diaphragmes disposés pour créer une pupille d'entrée 211 dans un plan accessible pour y placer le séparateur de polarisation 220, et créer un plan pupille de sortie qui permette de séparer spatialement les pupilles de sortie 231 les unes des autres. Notons que le séparateur de polarisation 220 (métasurface) peut être l'un de ces diaphragmes.

Le séparateur de polarisation 220 est disposé sur l'axe optique principal Δ du système optique 200, de préférence perpendiculairement à l'axe optique principal Δ. Il met en oeuvre une fonction optique de routage (triage) de polarisation, c'est-à-dire une fonction de déviation des faisceaux lumineux incidents en fonction de leur état de polarisation, les faisceaux lumineux étant ici ensuite transmis vers l'optique imageante 230.

En d'autres termes, le séparateur de polarisation 220 est configuré pour séparer les faisceaux lumineux incidents en fonction de leur état de polarisation, et les diriger sur des zones spatialement distinctes de l'optique imageante 230, comme illustré sur la figure 1. Ces zones spatialement distinctes, ici de l'optique imageante 230, définissent ici les pupilles de sortie 231 du système optique 200. Comme indiqué précédemment, les pupilles de sortie 231 sont donc au moins en partie décalées deux à deux orthogonalement à l'axe optique principal Δ.

Notons que les pupilles de sortie 231 peuvent évidemment être situées ailleurs que dans l'optique imageante 230, notamment lorsque le système optique 200 est un système optique plus complexe que deux lentilles. Dans ce cas, les pupilles de sortie 231 peuvent alors être situées en amont de l'optique imageante 230, et la pupille d'entrée 211 peut ne pas être confondue avec la lentille 210.

Par pupille de sortie, on entend une image du diaphragme d'ouverture par le système optique 200 vu du côté du capteur d'images 300. Il s'agit d'une zone délimitée spatialement par laquelle passe la lumière pour atteindre le capteur d'images 300.

Dans ce mode de réalisation, N est égal à 4. Aussi, le séparateur de polarisation 220 est adapté à router les faisceaux lumineux incidents suivant quatre états de polarisation différents, notés : PS1, PS2, PS3, PS4. On a ainsi au moins 4 pupilles de sortie 231, chaque pupille de sortie 231 étant agencée pour recevoir des faisceaux lumineux incidents selon un des quatre états de polarisation PS1, PS2, PS3, PS4.

Par exemple, le séparateur de polarisation 220 est adapté à dévier les faisceaux lumineux incidents suivant quatre orientations de polarisation différentes, par exemple des polarisations linéaires selon respectivement quatre directions formant respectivement des angles de 0°, 90°, +45°, -45° par rapport à une direction de référence.

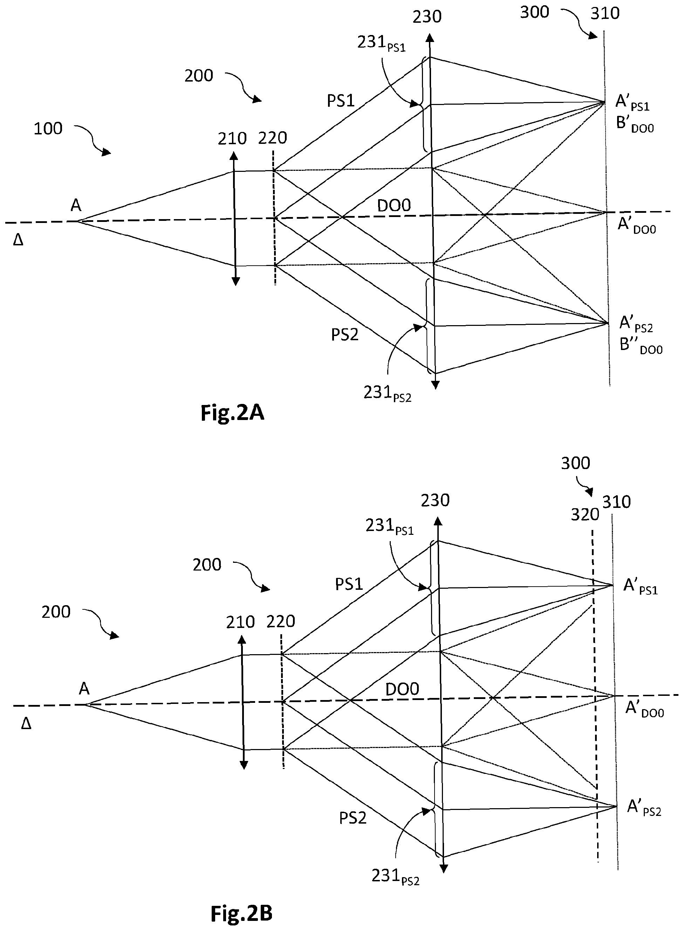

Dans le cas où le séparateur de polarisation 220 est une métasurface bidimensionnelle, le système optique 200 peut comporter une 5^{ième} pupille de sortie 231, laquelle est associée à l'ordre zéro de diffraction de la métasurface. Cette pupille de sortie n'est pas illustrée sur la figure 1, mais est représentée sur la figure 2A et la figure 2B. L'image du point objet A (situé sur l'axe optique principal Δ) est noté A'_{DO0} (DO0, pour Diffraction Order 0 en anglais) et est situé également sur l'axe optique principal Δ.

Comme décrit ci-avant, dans un exemple préféré de réalisation, le séparateur de polarisation 220 est une métasurface bidimensionnelle, comme illustré sur les figures 1, 2A et 2B. La métasurface bidimensionnelle comprend un réseau bidimensionnel de portions 221 d'un premier matériau, entourées latéralement par un matériau de remplissage d'indice de réfraction différent. De préférence, le premier matériau présente un indice de réfraction supérieur à celui du matériau de remplissage. Les portions 221 de la métasurface bidimensionnelle présentent des dimensions latérales sub-longueur d'onde, c'est-à-dire que la plus grande dimension latérale de chaque portion 221 est inférieure à la longueur d'onde principale destinée à être mesurée par le pixel de détection P sous-jacent (par exemple la longueur d'onde pour laquelle le rendement quantique du pixel P est maximal). Par exemple, pour des pixels P destinés à mesurer des rayonnements visibles ou proche infrarouge, par exemple des rayonnements de longueur d'onde inférieure à 1 µm, la plus grande dimension de chaque portion est comprise entre 10nm et 500nm (ici, la moitié de la longueur d'onde maximale de la bande spectrale de détection, ici 1µm), par exemple entre 80nm et 300nm.

Les portions 221 de la métasurface bidimensionnelle 220 présentent préférentiellement des dimensions latérales variées. Le dimensionnement et la disposition des portions 221 sont définis en fonction de la fonction optique recherchée. Ainsi, pour réaliser la fonction de routage de polarisation, on peut prévoir des portions 221 présentant, en vue de dessus, des formes asymétriques, par exemple rectangulaires ou elliptiques, étant entendu que les portions 221 peuvent présenter, en vue de dessus, une forme quelconque. Les portions 221 peuvent présenter des flancs verticaux, des flancs obliques ou des flancs en forme d'escalier, comprenant au moins une marche. Par ailleurs, chaque portion 221 peut être constituée d'un matériau unique ou d'un empilement de couches de matériaux différents. Le motif de la métasurface bidimensionnelle peut être défini au moyen d'un outil de simulation électromagnétique, par exemple en utilisant des méthodes de conception inverse, par exemple du type décrit dans l'article intitulé « Phase-to-pattern inverse design paradigm for fast realization of functional metasurfaces via transfer learning » de Zhu, R., Qiu, T., Wang, J. et al. Nat. Commun. 12, 2974 (2021), ou dans l'article intitulé « Matrix Fourier optics enables a compactfull-Stokes polarization caméra » de Rubin et al., SCIENCE, Vol. 365, Issue 6448 - 5 July 2019.

Les portions 221 de la métasurface bidimensionnelle ont de préférence tous une même hauteur, par exemple du même ordre de grandeur que la longueur d'onde principale destinée à être mesurée par chaque pixel de détection P, par exemple comprise entre 20 nm et 2 µm, de préférence entre 100 nm et 1000 nm, pour des rayonnements de longueur d'onde inférieure à 1 µm. Le recours à des portions 221 de hauteur constante permet de simplifier la fabrication de la métasurface bidimensionnelle.

Dans l'exemple illustré en figure 1, le séparateur de polarisation 220 comprend une seule métasurface bidimensionnelle. À titre de variante, le séparateur de polarisation du système optique pourrait comprendre plusieurs métasurfaces bidimensionnelles, disposées ou non de manière coplanaire.

Dans un autre exemple de réalisation du séparateur de polarisation, ledit séparateur de polarisation peut être un prisme de Wollaston. Le prisme de Wollaston est adapté à séparer les faisceaux lumineux incidents selon 2 états de polarisation orthogonaux. Le prisme de Wollaston est généralement constitué de deux prismes en matériaux biréfringents accolés, par exemple en calcite ou en quartz, dont les axes optiques sont orthogonaux entre eux. L'avantage de l'utilisation d'un prisme de Wollaston est l'absence d'un ordre zéro de diffraction et donc l'absence, autour de l'axe optique du système optique, d'une image non polarisée correspondant à cet ordre zéro de diffraction.

Le séparateur de polarisation 220 peut comprendre un seul prisme de Wollaston. À titre de variante, le séparateur de polarisation 220 du système optique 200 peut comprendre plusieurs prismes de Wollaston, chaque prisme séparant les faisceaux lumineux incidents selon 2 états de polarisation orthogonaux différents.

Dans un mode préféré de réalisation, notamment illustré sur les figures, l'optique imageante 230 est une lentille de focalisation, adaptée à focaliser les faisceaux lumineux incidents sur le plan du capteur d'images 300. L'optique imageante 230 est configurée d'une part pour recevoir les faisceaux lumineux incidents répartis spatialement selon leur état de polarisation et d'autre part pour focaliser ces faisceaux lumineux incidents selon les N états de polarisation sur les N zones correspondantes du capteur d'images 300, pour ainsi former N images de la scène sur ledit capteur d'images, les N images étant spatialement décalées les unes par rapport aux autres, comme illustré sur la figure 1. A noter qu'une image supplémentaire, associée à l'ordre zéro de diffraction de la métasurface bidimensionnelle 220 peut également être formée sur le capteur d'images 300. Ici, les pupilles de sortie 231 sont situées au niveau de l'optique imageante 230.

La figure 2A illustre un exemple de schéma optique d'une caméra polarimétrique 100, similaire à celle de l'invention, mais qui ne comporterait pas de filtres angulaires 320 décrits plus bas. Dans cet exemple, le séparateur de polarisation 220 est une métasurface bidimensionnelle.

Un point A est placé dans le plan objet du système optique 200, sur l'axe optique principal Δ. Des faisceaux lumineux provenant du point A sont collectés par l'optique de collimation 210, qui les transmet, collimatés (parallèles entre eux et à l'axe optique principal Δ), en direction du séparateur de polarisation 220.

Le séparateur de polarisation 220 assure la déviation des faisceaux lumineux selon, ici, deux états de polarisation différents PS1 et PS2. A noter que les faisceaux lumineux associés à l'ordre zéro de diffraction du séparateur de polarisation 220 ne sont pas déviés. Les faisceaux lumineux associés aux états de polarisation PS1 et PS2 sont ainsi dirigés en direction de l'optique imageante 230 de manière décalée deux à deux par rapport à l'axe optique principal Δ (au-dessus et au-dessous de l'axe optique principal Δ, selon l'orientation de la figure 2A), à distance de l'axe optique principal Δ. On obtient ainsi une pupille de sortie 231_{PS1} associée à l'état PS1, une pupille de sortie 231_{PS2} associée à l'état PS2, et une pupille de sortie associée à l'ordre zéro de diffraction. Ces pupilles de sortie sont décalées deux à deux orthogonalement à l'axe optique principal Δ, et ne se recouvrent donc pas totalement.

L'optique imageante 230 focalise ensuite les faisceaux lumineux incidents sur le plan image du système optique 200, dans des zones distinctes du capteur d'images 300, formant ainsi plusieurs images distinctes. Ainsi, l'image du point A associée à l'état PS1 est notée A'_{PS1}, et l'image du point A associée à l'état PS2 est notée A'_{PS2}. On note également A'_{DO0} l'image du point A associée à l'ordre zéro de diffraction du séparateur de polarisation 220. Les axes optiques associés à ces trois pupilles de sortie sont distincts les uns des autres, et les trois points image sont également spatialement distincts les uns des autres. On obtient ainsi deux images distinctes associées aux deux états de polarisation PS1 et PS2, et une image associée à l'ordre zéro de diffraction qui est également distincte des deux autres.

Cependant, on voit que l'image B' d'un point B de la scène, situé en dehors de l'axe optique et non représenté sur les figures 2A et 2B, associé à l'ordre zéro de diffraction, peut être détectée par le pixel de détection qui reçoit le point image A'_{PS1}. De même, l'image B" d'un autre point de la scène, associé à l'ordre zéro de diffraction, peut être détectée par le pixel de détection qui reçoit le point image A'_{PS2}. De plus, il est également possible qu'un point image associé à l'état de polarisation PS2 soit détecté par le sous-ensemble de pixels associés à l'état de polarisation PS1, et inversement.

La figure 2B illustre un exemple de schéma optique d'une caméra polarimétrique 100 selon un mode de réalisation, qui comporte des filtres angulaires 320. Dans cet exemple également, le séparateur de polarisation 220 est une métasurface bidimensionnelle.

Comme indiqué plus haut, au moins N filtres angulaires 320 sont situés entre le système optique 200 et les photodétecteurs 303 du capteur d'images 300. Chaque filtre angulaire 320 est adapté à transmettre à un sous-ensemble de pixels les faisceaux lumineux incidents provenant de la pupille de sortie 231 associée, et à filtrer au moins en partie les faisceaux lumineux incidents provenant de la ou des autres pupilles de sortie 231.

Ainsi, comme représenté sur la figure, les pixels de détection associés à la pupille de sortie 231_{PS1} transmettent les faisceaux lumineux présentant l'état de polarisation PS1, mais filtrent au moins en partie ceux associés à l'état de polarisation PS2 comme ceux associés à l'ordre zéro de diffraction. De même, les pixels de détection associés à la pupille de sortie 231_{PS2} transmettent les faisceaux lumineux présentant l'état de polarisation PS2, mais filtrent au moins en partie ceux associés à l'état de polarisation PS1 comme ceux associés à l'ordre zéro de diffraction.

On obtient ainsi une caméra polarimétrique présentant des performances améliorées, dans la mesure où on améliore la qualité des deux images associées aux états de polarisation PS1 et PS2, par le fait de filtrer au moins en partie les faisceaux lumineux que l'on peut qualifier de parasites, c'est-à-dire ceux qui ne sont pas associés à l'état de polarisation voulu. De plus, l'association des filtres angulaires 320 avec le séparateur de polarisation 220 permet d'utiliser des photodétecteurs standards.

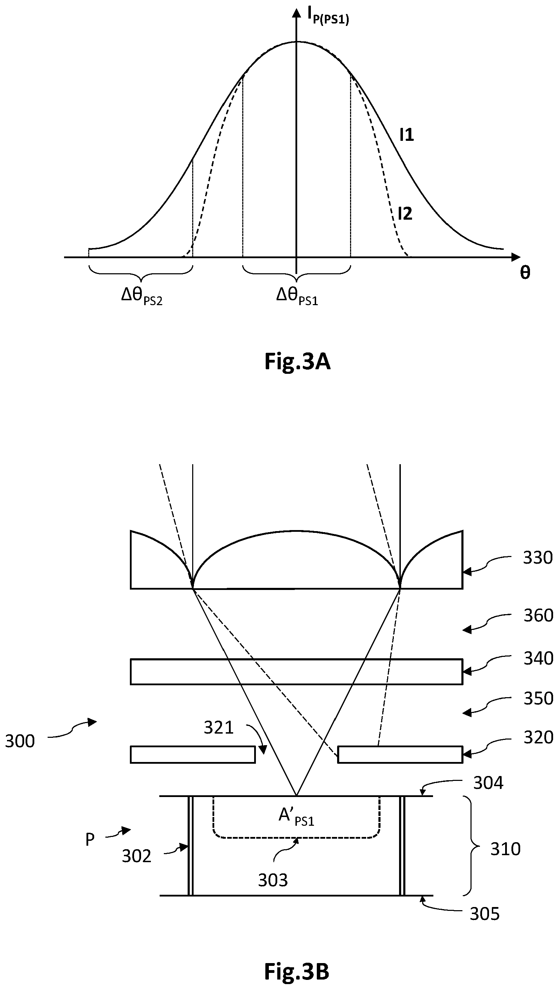

La figure 3A illustre un exemple de réponse angulaire d'un pixel de détection P du capteur d'images 300 de la caméra polarimétrique 100 selon un mode de réalisation. Il s'agit de l'amplitude du signal de mesure du pixel de détection, pour un flux lumineux incident donné, en fonction de l'angle d'incidence des faisceaux lumineux détectés.

On considère ici un pixel de détection dédié à l'état de polarisation PS1. Des faisceaux lumineux associés à l'état de polarisation PS2, qui forment des faisceaux parasites, sont susceptibles d'attendre ce pixel de détection.

On représente un trait continu la réponse angulaire d'un pixel de détection d'une caméra polarimétrique similaire à celle de la figure 2A, c'est-à-dire sans filtre angulaire 320, et en trait en pointillé, celle d'un pixel de détection d'une caméra polarimétrique selon un mode de réalisation de l'invention, c'est-à-dire avec filtre angulaire 320.

Les faisceaux lumineux associés à l'état de polarisation PS1 sont incidents sur le pixel de détection dans un cône angulaire noté Δθ_{PS1}. L'intégrale de la réponse I dans l'amplitude angulaire Δθ_{PS1} participe à former le signal de mesure.

Cependant, on remarque que des faisceaux lumineux associés à l'état de polarisation PS2 sont également incidents sur le pixel de détection dans un cône angulaire noté Δθ_{PS2}. Dans le cas d'une caméra polarimétrique ne comportant pas de filtre angulaire 320, ces faisceaux lumineux participent également à former le signal de mesure, ce qui dégrade les performances de la caméra polarimétrique.

En revanche, la réponse angulaire d'un pixel de détection associé à un filtre angulaire (trait pointillé) montre une sensibilité réduite aux faisceaux lumineux situés hors de l'amplitude angulaire Δθ_{PS1}. Autrement dit, le filtre angulaire permet de filtrer les faisceaux lumineux qui ne sont pas associés à l'état de polarisation prévu (et donc qui ne proviennent pas de la pupille de sortie associée au pixel de détection). Les performances de la caméra polarimétrique selon l'invention sont donc améliorées.

Revenons à la figure 1. Le capteur d'images 300 est situé dans le plan image du système optique 200. Il comprend une pluralité de pixels de détection P. Chaque pixel de détection P comprend un photodétecteur 303. Comme indiqué précédemment, les pixels de détection sont regroupés en sous-ensemble, chaque sous-ensemble étant associé à une pupille de sortie. On a donc au moins N sous-ensembles de pixels de détection, pour N pupilles de sortie associée aux N états de polarisation. Un sous-ensemble de pixels de détection, centré sur l'axe optique principal Δ, peut être associé à la pupille de sortie liée à l'ordre zéro de diffraction du séparateur de polarisation 220 (dans le cas d'une métasurface bidimensionnelle).

La figure 3B est une vue schématique et partielle, en coupe transversale, d'un capteur d'images 300 d'une caméra polarimétrique selon un mode de réalisation.

Les photodétecteurs 303 des pixels de détection sont formés dans un substrat semiconducteur 310. Le substrat semiconducteur 310 est réalisé par exemple en un matériau semiconducteur monocristallin, par exemple en silicium.

Des tranchées ou murs d'isolation 302, s'étendant verticalement dans le substrat semiconducteur 301, séparent latéralement, électriquement et/ou optiquement, les photodétecteurs 303 des pixels de détection les uns des autres, de manière à limiter le crosstalk. Les murs d'isolation 302 sont par exemple réalisés en un matériau diélectrique, par exemple de l'oxyde de silicium.

Dans l'exemple de la figure 3B, le capteur d'images 100 est un capteur à éclairement par la face arrière, aussi appelé capteur BSI (de l'anglais « *Back Side Illumination* »), c'est-à-dire que les faisceaux lumineux en provenance de la scène à imager éclairent le substrat semiconducteur par une face, dite face arrière 304. La face arrière 304 du substrat semiconducteur 310 du capteur d'images est disposée dans le plan image du système optique 200.

Le capteur d'images 300 comprend en outre, du côté de la face avant 305, correspondant à la face inférieure du substrat semiconducteur 101, un empilement (non représenté sur les figures) de couches isolantes et conductrices (par exemple métalliques), communément appelé empilement d'interconnexion, dans lequel sont formés des éléments d'interconnexion des pixels de détection P du capteur d'images 300.

Il est clair que les modes de réalisation décrits s'appliquent également à des capteurs à éclairement par la face avant ou capteur FSI (de l'anglais « *Front Side Illumination* »), c'est-à-dire des capteurs dans lesquels le substrat semiconducteur est destiné à être éclairé par sa face en contact avec l'empilement d'interconnexion.

Les pixels de détection P du capteur d'images 300 sont préférentiellement agencés en matrice selon des lignes et des colonnes, comme illustré sur la figure 1. Les pixels de détection P sont préférentiellement tous identiques, aux dispersions de fabrication près, ou similaires.

Les pixels de détection P du capteur d'images sont répartis en N sous-ensembles de pixels. Chaque sous-ensemble de pixels de détection P comprend un ensemble de pixels adjacents. Les N sous-ensembles de pixels sont distincts les uns des autres. Ainsi, chaque pixel de détection P n'appartient qu'à un seul sous-ensemble.

Dans l'exemple de la figure 1, les pixels de détection P sont répartis en quatre sous-ensembles de pixels. Chaque sous-ensemble de pixel de détection P est destiné à recevoir des faisceaux lumineux incidents, provenant de sa pupille de sortie associée, selon un des quatre états de polarisation PS1, PS2, PS3, PS4.

Par ailleurs, le capteur d'images 300 comporte en outre N filtres angulaires 320. Ils sont situés entre le système optique 200 et les photodétecteurs 303. Comme indiqué précédemment, chaque filtre angulaire 320 est adapté à transmettre à un sous-ensemble de pixels les faisceaux lumineux incidents provenant de la pupille de sortie 231 associée, et à filtrer au moins en partie les faisceaux lumineux incidents provenant de la ou des autres pupilles de sortie 231.

Chaque filtre angulaire 320 est donc associé respectivement à un sous-ensemble de pixels de détection et à la pupille de sortie 231 associée. Ainsi, dans l'exemple de la figure 1 où le séparateur de polarisation 220 assure la déviation des faisceaux lumineux selon les quatre états de polarisation PS1, PS2, PS3 et PS4, l'état de polarisation PS1 est associé à la pupille de sortie (notée ici 231_{PS1}) puis au filtre angulaire (noté ici 320_{PS1}) et au sous-ensemble de pixels de détection (noté ici EP_{PS1}), l'état de polarisation PS2 est associé à la pupille de sortie 231_{PS2} puis au filtre angulaire 320_{PS2} et au sous-ensemble EP_{PS2} de pixels de détection, et ainsi de suite.

Dans l'exemple de la figure 3B, les filtres angulaires 320 sont des structures opaques comprenant des ouvertures traversantes 321, chaque ouverture traversante 321 étant disposée en vis-à-vis du photodétecteur 303 d'un pixel de détection P. Les dimensions transversales des ouvertures traversantes 321 sont définies pour permettre la transmission des faisceaux lumineux provenant de la pupille de sortie associée, et à filtrer au moins en partie ceux provenant des autres pupilles de sortie.

A titre d'exemple, les structures opaques sont réalisées en un matériau par exemple métallique, tel que de l'aluminium, du cuivre ou du tungstène, entre autres. De préférence, les N filtres angulaires sont disposés de manière coplanaire. De préférence, les N filtres angulaires 320 sont réalisés dans une même structure opaque. La structure opaque est par exemple une grille.

Ainsi, comme le montre la figure 3B, les faisceaux lumineux provenant de la pupille de sortie associée (traits continus) sont transmis par le filtre angulaire 320, alors que ceux provenant des autres pupilles de sortie (traits pointillés) sont au moins en partie filtrés, et ici entièrement filtrés.

Dans un mode de réalisation, le capteur d'images 300 peut comporter une pluralité de microlentilles 330. Les microlentilles 330 sont de préférence disposées entre le système optique 200 et les filtres angulaires 320. Elles assurent une focalisation des faisceaux lumineux incidents sur le pixel de détection associé à la microlentille 330. Dans le cas où le capteur d'images 300 ne comporte pas de microlentilles 330, il peut comporter un filtre angulaire similaire à celui des filtres 320 pour assurer une fonction de sélection angulaire similaire à celle des microlentilles 330.

Dans un exemple de réalisation, mais non limitatif, et comme illustré sur la figure 1, chaque microlentille 330 s'étend, en dimension, en vis-à-vis d'un pixel. En d'autres termes, il y a ainsi autant de microlentilles que de pixels dans le capteur d'images. Notons que les microlentilles 330 peuvent être décalées transversalement au pixel en vis-à-vis pour tenir compte de l'angle principal par lequel arrivent les faisceaux lumineux destinés à être captés par ce pixel. Les microlentilles 330, les filtres polariseurs 340 et les ouvertures traversantes 321 des filtres angulaires 320 sont alors décalés en fonction de la valeur de cet angle d'incidence.

Dans un mode de réalisation, comme illustré sur la figure 3B, le capteur d'images peut comporter, outre les N filtres angulaires, N filtres polariseurs 340. Les N filtres polariseurs 340 sont disposés ici entre les microlentilles 330 et les filtres angulaires 320, mais ils pourraient être situés entre les filtres angulaires 320 et les photodétecteurs 303.

Chaque filtre polariseur 340 est associé respectivement à un sous-ensemble de pixels, et donc à une pupille de sortie 231 du système optique 200.

Chaque filtre polariseur 340 est adapté à transmettre les faisceaux lumineux incidents selon un état de polarisation prédéfini et à bloquer les faisceaux lumineux incidents selon les autres états de polarisation.

Ainsi, le capteur d'images 300 comprend N filtres polariseurs 340 présentant chacun des orientations de polarisation différentes et sont ainsi adaptés chacun à transmettre uniquement les faisceaux lumineux incidents selon un état de polarisation donné, plus particulièrement les faisceaux lumineux incidents provenant respectivement de la pupille de sortie associée.

Dans une forme préférée de réalisation, les filtres polariseurs 240 sont des structures métalliques comprenant des ouvertures traversantes et transmettant majoritairement les faisceaux lumineux incidents selon un état de polarisation prédéfini, c'est-à-dire les faisceaux lumineux incidents provenant uniquement de la pupille de sortie associée, et absorbant ou réfléchissant les rayonnements selon les autres états de polarisation.

A titre d'exemple non limitatif, les structures métalliques des filtres polariseurs sont réalisées en aluminium, en tungstène ou encore en cuivre. De préférence, les N filtres polariseurs sont disposés de manière coplanaire. Dans un exemple de réalisation, les N filtres polariseurs sont réalisés dans une même structure métallique.

Une couche de remplissage 350 peut être disposée entre les filtres angulaires 320 et les filtres polariseurs 340. De même, une couche de remplissage 360 peut être disposée entre les filtres polariseurs 340 et les microlentilles 330.

En variante, les filtres angulaires 320 et les filtres polariseurs 340 peuvent être réalisés dans la même couche : la partie opaque de la couche 320 reste inchangée, et les filtres polariseurs 340 sont situés dans les ouvertures traversantes 321.

La(Les) couche(s) de remplissage 350, 360 peut(peuvent) être par exemple réalisée(s) dans un matériau diélectrique, transparent aux longueurs d'onde à détecter, tel que de l'oxyde de silicium, du nitrure de silicium, de l'alumine, ou de l'oxyde de tantale.

De même, les ouvertures de structures métalliques des filtres angulaires 320 et des filtres polariseurs 340 peuvent être remplies par un matériau diélectrique, transparent aux longueurs d'onde à détecter, tel qu'un oxyde de silicium, un nitrure de silicium, de l'alumine, ou un oxyde de tantale, entre autres.

En variante, les ouvertures des structures métalliques des filtres angulaires et des filtres polariseurs peuvent être laissées vides ou remplies d'air.

La description ci-avant illustre clairement que, par ses différentes caractéristiques et leur avantage, la présente invention atteint les objectifs fixés. En particulier, la présente invention propose une caméra polarimétrique qui permet de bloquer les faisceaux lumineux incidents parasites liés au chevauchement des images sur le capteur d'images et ceux issus de l'ordre zéro générés par le séparateur de polarisation, lorsque celui-ci est une métasurface bidimensionnelle.

## Revendications

1. Caméra polarimétrique (100), comportant un système optique (200) et un capteur d'images (300) :
∘ le système optique (200), présentant un axe optique principal (Δ), étant adapté à former sur le capteur d'images (300) au moins N images spatialement distinctes d'une scène à imager, à raison d'une image par état de polarisation, avec N supérieur ou égal à 2, N étant un nombre prédéfini d'états de polarisation, et comportant :
• un séparateur de polarisation (220) adapté à dévier les faisceaux lumineux incidents provenant de la scène à imager selon les N états de polarisation, le système optique présentant alors au moins N pupilles de sortie (231) au moins en partie décalées deux à deux orthogonalement à l'axe optique principal (Δ) ;
∘ le capteur d'images (300) comportant une pluralité de pixels de détection (P) comprenant chacun un photodétecteur (303),
• les pixels de détection (P) étant répartis en au moins N sous-ensembles de pixels, associés chacun à une pupille de sortie (231), et destinés chacun à recevoir les faisceaux lumineux incidents selon l'état de polarisation de la pupille de sortie associée ;
**caractérisée en ce que** le capteur d'images (300) comporte au moins N filtres angulaires (320) situés entre le système optique (200) et les photodétecteurs (303), chaque filtre angulaire (320) étant adapté à transmettre à un sous-ensemble de pixels les faisceaux lumineux incidents provenant de la pupille de sortie (231) associée, et à filtrer au moins en partie les faisceaux lumineux incidents provenant de la ou des autres pupilles de sortie (231).

2. Caméra polarimétrique (100) selon la revendication 1, dans laquelle les pixels d'un sous-ensemble de pixels sont adjacents.

3. Caméra polarimétrique (100) selon l'une quelconque des revendications précédentes, dans laquelle les N filtres angulaires (320) sont disposés de manière coplanaire.

4. Caméra polarimétrique (100) selon l'une quelconque des revendications précédentes, dans laquelle les N filtres angulaires (320) sont formés dans une même grille présentant des ouvertures dimensionnées pour transmettre à un sous-ensemble de pixels les faisceaux lumineux incidents provenant de la pupille de sortie associée, et à filtrer au moins en partie les faisceaux lumineux incidents provenant des autres pupilles de sortie.

5. Caméra polarimétrique (100) selon la revendication 4, dans laquelle la grille est opaque.

6. Caméra polarimétrique (100) selon l'une quelconque des revendications précédentes, dans laquelle le capteur d'images (300) comporte une pluralité de microlentilles (330), adaptées à focaliser les faisceaux lumineux incidents sur les photodétecteurs des pixels de détection (P), situées entre le système optique (200) et les filtres angulaires (320).

7. Caméra polarimétrique (100) selon l'une quelconque des revendications précédentes, dans laquelle le séparateur de polarisation (220) est une métasurface bidimensionnelle.

8. Caméra polarimétrique (100) selon l'une quelconque des revendications précédentes, dans laquelle le capteur d'images (300) comporte N filtres polariseurs (340) situés entre le système optique (200) et les filtres angulaires (320), adaptés à transmettre à un sous-ensemble de pixels les faisceaux lumineux incidents provenant de la pupille de sortie associée et présentant l'état de polarisation associé, et à filtrer au moins en partie les faisceaux lumineux incidents provenant des autres pupilles de sortie et présentant donc d'autres états de polarisation.

9. Caméra polarimétrique (100) selon la revendication 8, dans laquelle les N filtres polariseurs (340) sont disposés de manière coplanaire.

10. Caméra polarimétrique (100) selon l'une quelconque des revendications 8 ou 9, dans laquelle les N filtres polariseurs (340) sont réalisés dans une même structure métallique.
